# EUROPÄISCHE PATENTSCHRIFT

(11) **EP 4 189 458 B1**
(45) Veröffentlichungstag und Bekanntmachung des Hinweises auf die Patenterteilung: **03.12.2025**
(21) Anmeldenummer: 21752527.8
(22) Anmeldetag: 29.07.2021
(51) Int. Cl.: G02B 21/00, G02B 27/58

(54) **DETEKTIONSEINRICHTUNG FÜR EIN LASERSCANNING-MIKROSKOP**
DETECTION DEVICE FOR A LASER SCANNING MICROSCOPE
DISPOSITIF DE DÉTECTION POUR MICROSCOPE À BALAYAGE LASER

(30) Priorität: 30.07.2020 DE 102020120114
(43) Veröffentlichungstag der Anmeldung: 07.06.2023
(73) Patentinhaber: Abberior Instruments GmbH, 37077 Göttingen (DE)
(72) Erfinder: MITTELSTÄDT, Haugen, 37120 Bovenden (DE); HEINE, Jörn, 37213 Witzenhausen (DE); REUSS, Matthias, 37083 Göttingen (DE); HENRICH, Matthias, 69115 Heidelberg (DE); FISCHER, Joachim, 76228 Karlsruhe (DE)
(86) Internationale Anmeldenummer: PCT/EP2021/071344
(87) Internationale Veröffentlichungsnummer: WO 2022/023501

(56) Entgegenhaltungen:
- WO-A1-2015/022147
- DE-A1- 102004 029 733
- DE-A1- 19 835 070
- US-A1- 2010 188 741
- US-A1- 2014 312 212

## Beschreibung

Die Erfindung betrifft eine Detektionseinrichtung für ein Laserscanning-Mikroskop, wobei die Detektionseinrichtung einen Lichteingang, wenigstens ein Filtermodul und wenigstens einen ortsauflösenden Detektor aufweist und eingerichtet ist, Licht von dem Lichteingang zu dem Filtermodul und von dort zu dem ortsauflösenden Detektor zu leiten.

Eine solche Detektionseinrichtung ist beispielsweise aus der WO 2015/022147 A1 bekannt. Die DE 10 2004 029 733 A1 beschreibt ein spezielles Rastermikroskop mit nicht entscannter Detektion, bei dem im Lichtweg ein Filter aus einer Kombination eines Kurzpass- und eines Langpassfilters enthalten ist. Die US 2014/0312212 A1 beschreibt Mikroplatten-Lesegerät, bei dem ebenfalls ein Paar kontinuierliche Filterelemente verwendet wird, um den zu detektierenden Wellenlängenbereich des eintreffenden Licht herauszufiltern.

Laserscanning-Mikroskope sind aus dem Stand der Technik bekannt. Eine besondere Form der Laserscanning-Mikroskope wird beispielsweise für die sogenannte "Image Scanning Microscopy" verwendet. Dabei handelt es sich um ein Verfahren der Fluoreszenz-Mikroskopie, bei dem Fluorophore, die beispielsweise in einer biologischen Probe angeordnet sind, mittels einer fokussierten Anregungsstrahlung, insbesondere durch einen Laserstrahl, zum Leuchten angeregt werden. Der fokussierte Anregungsstrahl wird dabei rasternd über die Probe geführt und regt folglich jeweils nur in einem räumlich eng begrenzten Bereich die vorhandenen Fluorophore zum Leuchten an. Zu jedem Rasterpunkt wird die Fluoreszenzemission mit einem konfokal angeordneten Detektor erfasst, der im Unterschied zu in der herkömmlichen Laserscanning-Mikroskopie verwendeten Detektoren ortsauflösend ist. Es wird folglich zu jedem Rasterpunkt ein Teilbild der Probe durch das entsprechende Mikroskop erfasst, wobei aus der Gesamtheit dieser Teilbilder das Gesamtbild errechnet werden kann. Die erzielbare Auflösung des Gesamtbildes hängt insbesondere von der Güte der Abbildung der einzelnen Teilbilder auf den ortsauflösenden Detektor ab und ist höher als die Auflösung eines herkömmlichen konfokal aufgenommenen Bildes. Unter Image Scanning Microscopy wird hier in der Folge jede Form der Laserscanning-Mikroskopie mit ortsauflösender Detektion der Fluoreszenzemission zu jedem Rasterpunkt verstanden, beispielsweise auch STED-Mikroskopie (STED: stimulated emission depletion) unter Verwendung eines ortsauflösenden Detektors.

In Laserscanning-Mikroskopen wird bei der Erfassung der Fluoreszenzemission durch verschiedene Filteranordnungen vermieden, Anregungslicht oder Anregungsstrahlung zu detektieren, die beispielsweise als Streulicht den Weg in den Detektor des Mikroskops finden könnte. Daher sind seit jeher Filteranordnungen in den Laserscanning-Mikroskopen verbaut, die Strahlung der Anregungswellenlänge herausfiltern. Ein Laserscanning-Mikroskop ist vorzugsweise jedoch in der Lage, die Fluoreszenzstrahlung unterschiedlicher Fluorophore zu detektieren, damit nicht für jedes verwendete Fluorophor ein separates Mikroskop verwendet werden muss. Unterschiedliche Fluorophore weisen jedoch Fluoreszenzstrahlung unterschiedliche Wellenlängen auf, sodass es von Vorteil ist, unterschiedliche Filter in den Mikroskopen zu verwenden, um auf die geänderten Anforderungen, die durch unterschiedliche in Proben verwendete Fluorophore hervorgerufen werden, reagieren zu können.

Die DE 102 13 187 A1 beschreibt eine Ausführungsform, bei der mehrere spektrale Bänder oder Kanäle gleichzeitig erfasst und detektiert werden können, indem Licht, das an der ersten verschiebbaren Blende reflektiert wird, einer weiteren verschiebbaren Blende zugeführt wird. Dabei tritt jeweils ein Teil des Lichtes durch die Blende hindurch und wird einem Detektor zugeführt, der jedoch kein ortsauflösender Detektor ist. Eine ähnliche Vorrichtung ist der DE 10 2014 116 782 A1 zu entnehmen, bei der ebenfalls das durch eine Lochblende geführte Licht durch ein Prisma spektral aufgespalten und durch verschiebbare Blenden und Linsen gefiltert wird. Die verschiebbaren Blenden, Linsen und zusätzliche Prismen, um das Licht bestimmter Wellenlängenbereiche wieder zu bündeln, bilden ebenfalls ein kontinuierliches Filtermodul im Sinne der vorliegenden Erfindung. Die beschriebenen Detektoren sind jedoch nicht ortsauflösend.

In der DE 198 35 070 B4 wird statt eines Prismas ein variabler Bandpassfilter verwendet, der einen variablen Kurzpassfilter und einen variablen Langpassfilter beinhaltet. Während ein Kurzpassfilter für Wellenlängen durchlässig ist, die kürzer als eine Grenzwellenlänge sind, ist ein Langpassfilter durchlässig für Wellenlängen, die länger als eine Grenzwellenlänge sind. Durch geschickte Kombinationen der Grenzwellenlängen von Kurz- und Langpassfilter können so die gewünschten Wellenlängenbereiche herausgefiltert werden. Die unterschiedlichen Kurzpassfilter und/oder Langpassfilter können als einzelne Filter, beispielsweise in einem Filterrad, wobei das Rad gedreht werden kann, um einen anderen Filter in den Strahlengang zu bewegen, oder als kontinuierliche Farbverlaufsfilter ausgebildet sein, die entlang einer Längsrichtung verschoben werden können. Auch bei dieser Ausgestaltung wird jedoch das zu detektierende Licht konfokal mittels eines Punktdetektors detektiert, das, bevor es den Filter erreicht, noch durch eine Lochblende geführt wird. Eine ortsauflösende Detektion der Fluoreszenzemission zu einem Rasterpunkt ist auch in dieser Ausgestaltung nicht möglich. Ähnliche Einrichtungen sind der DE 10 2006 034 908 A1, der DE 10 2009 012 874 B4 und der DE 10 2018 126 232 B3 bekannt. In allen diesen Dokumenten werden Farbverlaufsfilter als Filterelemente verwendet, um Licht, das zuvor durch eine Lochblende geführt wurde, spektral zu filtern, das dann einem Detektor zugeführt wird, der nicht ortsauflösend ist.

Der Erfindung liegt daher die Aufgabe zugrunde, eine Detektionseinrichtung so weiterzuentwickeln, dass eine kontinuierlich einstellbare spektrale Filterung bei gleichzeitiger ortsauflösende Detektion möglich wird.

Die Erfindung löst die gestellte Aufgabe durch eine Detektionseinrichtung gemäß dem Oberbegriff des Anspruchs 1, die sich dadurch auszeichnet, dass wenigstens ein Filtermodul als kontinuierliches Filtermodul mit zwei kontinuierlich durchstimmbaren Filterelementen ausgebildet ist und optisch hinter dem kontinuierlichen Filtermodul wenigstens ein Kompensatorelement angeordnet ist, mittels dessen eine Fokuslage von Licht auf dem ortsauflösenden Detektor einstellbar ist.

Im Stand der Technik mit konfokaler, nicht ortsauflösender Detektion definiert die Größe und die Genauigkeit der Positionierung der konfokalen Lochblende die Ortsauflösung, mit der ein Bild einer Probe aufgenommen werden kann. Der Lochblende nachgeordnete und dem Detektor vorgeordnete Elemente wirken sich nicht auf die erzielbare Auflösung aus. Die Verwendung eines ortsauflösenden Detektors beispielsweise zur Erhöhung der erzielbaren Auflösung des Gesamtbildes der Probe anstelle eines über die gesamte Detektorfläche integrierenden Detektors verändert die Randbedingungen und Anforderungen an die Position und die Art und Weise der verwendeten optischen Elemente, die im Strahlengang des Lichtes angeordnet werden dürfen, fundamental. Eine Störung der räumlichen Verteilung und damit der Ortsauflösung des Lichtes verbietet sich, wenn der ortsauflösende Detektor mit Vorteil genutzt werden soll.

Deshalb ist man im Stand der Technik davon ausgegangen, dass die oben genannten Anordnungen, bei denen bei konfokaler, nicht ortsauflösender Detektion die spektrale Trennung erst nach der Lochblende erfolgt, nicht in der Image Scanning Microscopy genutzt werden können. In der herkömmlichen Laserscanning-Mikroskopie werden die laterale und axiale Ortsauflösung der konfokalen Detektion im Wesentlichen durch die Lochblende bestimmt. Im Strahlengang nachgeordnete Elemente beeinflussen die Ortsauflösung bei dieser Art der Mikroskopie grundsätzlich nicht. Dies ist jedoch bei der Image Scanning Microscopy mit einer ortsaufgelösten Detektion der Fluoreszenzemission zu jedem Rasterpunkt anders, da sich bei dieser alle optischen Elemente vor dem ortsauflösenden Detektor auf die Ortsauflösung des Gesamtbildes auswirken. Zudem ist man davon ausgegangen, dass insbesondere die als kontinuierlich durchstimmbare Filterelemente bekannten Farbverlaufsfilter einen Einfluss auf die Ortsauflösung haben, da sie eine räumliche Inhomogenität bezüglich der Wellenlänge in dem durch den Filter hindurchgetretenen Licht hervorrufen. Außerdem führen mechanische Verschiebungen einzelner optischer Bauteile innerhalb des Strahlenganges, wie sie beispielsweise bei der Verwendung von Farbverlaufsfiltern oder Prismenanordnungen zur Erstellung der Detektions-Wellenlängenbänder notwendig sind, bei ortsauflösenden Detektoren und einer gewünschten ortsauflösenden Detektion im Bereich des Beugungslimits zu Veränderungen des optischen Pfades und damit der Abbildungseigenschaften der Detektionseinrichtung.

Insbesondere kommt es zu lateralen Verschiebungen der Fokuslage auf dem ortsauflösenden Detektor.

Der Erfindung liegt die Erkenntnis zugrunde, dass die Anordnung einer Filterkaskade im Strahlengang von Licht auf dem Weg zu einem ortsauflösenden Detektor einen allenfalls sehr kleinen Einfluss auf die Ortsauflösung hat. Dadurch ist die Verwendung eines Farbverlaufsfilters möglich. Die Auswirkungen der mechanischen Verschiebungen einzelner Bauteile im Strahlengang des Lichtes können durch das Kompensatorelement ausgeglichen werden, durch das eine Auftreffposition von Licht auf dem ortsauflösenden Detektor einstellbar ist.

Erfindungsgemäß weist die Detektionseinrichtung wenigstens ein Filtermodul auf, das als kontinuierliches Filtermodul ausgebildet ist. Es verfügt über zwei kontinuierlich durchstimmbare Filterelemente. Diese sind vorzugsweise unabhängig voneinander durchstimmbar. Der Anteil des einfallenden Lichtes, der dem wenigstens einen ortsauflösenden Detektor zugeleitet wird, ist also ein spektraler Anteil des einfallenden Lichtes, der eine obere und eine untere Grenzwellenlänge aufweist. Die obere Grenzwellenlänge wird bevorzugt durch eines der Filterelemente und die untere Grenzwellenlänge durch das andere der Filterelemente bestimmt. Lassen sich die beiden Filterelemente unabhängig voneinander durchstimmen, ist auch die Differenz zwischen oberer und unterer Grenzwellenlänge und damit die spektrale Breite des auf den ortsauflösenden Detektor geleiteten Lichtanteils einstellbar. Können die beiden Filterelemente nur gemeinsam durchgestimmt werden, etwa bei einer Lochblende im Strahlengang eines durch ein Prisma spektral aufgespaltenen Lichtstrahls, ist die spektrale Breite des Lichtes, das auf den Detektor gelang nicht einstellbar. Auch eine solche Ausführungsform ist durch die gewählte Formulierung abgedeckt.

Wenigstens eines der Filtermodule ist aus zwei kontinuierlich durchstimmbaren Filterelementen gebildet. Unter einem kontinuierlich durchstimmbaren Filterelement wird ein Filterelement verstanden, das als Kurzpassfilter oder als Langpassfilter verwendet werden kann und dessen Grenzwellenlänge kontinuierlich, also stufenlos, einstellbar ist. Ein kontinuierlich durchstimmbarer Kurzpassfilter lässt folglich Licht hindurch, das eine Wellenlänge aufweist, die kürzer als die Grenzwellenlänge ist. Dabei ist die Grenzwellenlänge frei einstellbar. Analog dazu lässt ein kontinuierlich durchstimmbarer Langpassfilter Licht hindurch, dessen Wellenlänge größer als die Grenzwellenlänge ist, wobei die Grenzwellenlänge ebenfalls frei einstellbar ist. Durch Kombination eines Kurzpassfilters und eines Langpassfilters lässt sich Licht eines bestimmten Wellenlängenbereichs aus einem größeren Spektralbereich herausfiltern. Dieses wird dann einem Detektor, vorzugsweise dem wenigstens einen ortsauflösenden Detektor, zugeleitet.

Ein kontinuierliches Filtermodul mit zwei kontinuierlich durchstimmbaren Filterelementen kann als Transmissionsfilter oder als Reflexionsfilter verwendet werden. Bei einem Transmissionsfilter wird der Teil des Lichtes dem Detektor zugeleitet, der die beiden kontinuierlich durchstimmbaren Filterelemente in Transmission durchläuft, während bei einem Reflexionsfilter der Teil des Lichtes dem Detektor zugeleitet wird, der an den Filterelementen reflektiert wird. Eine Verwendung eines Transmissionsfilters ist von Vorteil.

Beim Verschieben wenigstens eines der beiden kontinuierlich durchstimmbaren Filterelemente ist es in der Regel nötig, das jeweilige Filterelement mechanisch zu bewegen. Dies kann motorgetrieben, beispielsweise durch einen Elektromotor geschehen oder, um höhere Genauigkeit zu erreichen, durch Piezo-Elemente erreicht werden. Unabhängig davon, wie die Bewegung des Filterelementes hervorgerufen wird, muss das Filterelement beweglich gelagert sein, was aufgrund von Fertigungstoleranzen, Fertigungsungenauigkeiten und Spiel dazu führt, dass sich die Ausrichtung des Filterelementes relativ zum optischen Pfad verändern kann, was bereits zu einer Verschiebung des gefilterten Lichtes, das heißt der Fokuslage des gefilterten Lichtes auf dem ortsauflösenden Detektor führen kann. Dies kann durch das Kompensatorelement ausgeglichen werden.

Erfindungsgemäß ist das wenigstens eine Kompensatorelement optisch hinter dem kontinuierlichen Filtermodul angeordnet. Das bedeutet, dass das Kompensatorelement das Licht auf dem Weg bis zu dem Filtermodul nicht beeinflusst. Es wird durch das Kompensatorelement folglich nur ein Bauteil bewegt oder auf sonstige Weise beeinflusst, das im Strahlengang hinter dem Filtermodul angeordnet ist. Alternativ oder zusätzlich dazu kann das Kompensatorelement auch verwendet werden, um das Licht zu beeinflussen, das das Filtermodul verlassen hat.

Vorzugsweise ist das wenigstens eine Filtermodul Teil einer Filterkaskade mit wenigstens zwei Filtermodulen. Dadurch wird es möglich, mehrere spektrale Kanäle, also Wellenlängenbereiche, des in die Detektionseinrichtung durch den Lichteingang einfallenden Lichtes zu detektieren, ohne Einstellungen an der Filterkaskade oder der Detektionseinrichtung zu verändern. Die Anzahl der Kanäle, die auf diese Weise detektiert werden können, entspricht der Anzahl der Filtermodule in der Filterkaskade oder der Anzahl der Filtermodule in der Filterkaskade plus Eins. Mit einem einzigen Filtermodul können zwei Kanäle detektiert werden.

In einer bevorzugten Ausgestaltung ist das wenigstens eine Kompensatorelement eingerichtet, den wenigstens einen ortsauflösenden Detektor zu bewegen. Das beinhaltet bevorzugt eine Bewegung in einer Ebene senkrecht zur optischen Achse, also eine laterale Bewegung. Alternativ oder zusätzlich dazu beinhaltet die Bewegung eine Verschiebung des Detektors entlang der optischen Achse, also eine axiale Bewegung.

Bevorzugt ist wenigstens ein Kompensatorelement zwischen dem kontinuierlichen Filtermodul und dem ortsauflösenden Detektor angeordnet. Dabei bedeutet "zwischen" nicht zwangsläufig örtlich oder geometrisch dazwischen, auch wenn dies bevorzugte Ausgestaltungen sind. Wichtig ist lediglich, dass das wenigstens eine Kompensatorelement optisch zwischen dem Filtermodul und dem Detektor angeordnet ist, also eingerichtet ist, das Licht auf dem Weg von dem Filtermodul zu dem Detektor zu beeinflussen.

Vorzugsweise ist wenigstens ein Kompensatorelement, besonders bevorzugt jedes Kompensatorelement, als bewegbarer, insbesondere kippbarer Spiegel ausgebildet, der weiter bevorzugt um zwei Kippachsen kippbar gelagert ist. Besonders bevorzugt stehen die beiden Kippachsen senkrecht aufeinander. In der Regel ist es ausreichend, die Fokuslage von Licht, das heißt die Lage des Punktes, der zum Zentrums des Beleuchtungsfokus in der Probe konjugiert ist, auf dem ortsauflösenden Detektor in zwei Richtungen einzustellen, die entlang der Detektorebene, also senkrecht zur optischen Achse und dem optischen Pfad, verlaufen. Diese beiden als X-Richtung und Y-Rechnung bezeichneten Richtungen, die bevorzugt senkrecht aufeinander stehen, verlaufen folglich parallel zur Detektorebene. In einer bevorzugten Ausgestaltung ist es durch das wenigstens eine Kompensatorelement zudem möglich, auch die Fokussierung des auftreffenden Lichtes auf den ortsauflösenden Detektor zu verändern, also eine Verschiebung der Fokuslage in der dritten senkrecht stehenden Richtung, der Z-Richtung, zu erreichen. Dies kann bevorzugt dadurch erreicht werden, eine Linse im Strahlengang zu verschieben. Eine derartige Linse ist beispielsweise vorhanden, um das von der Filterkaskade zu dem ortsauflösenden Detektor geleitete Licht auf der Detektorfläche zu fokussieren. Diese Linse, die auch eine Linsenanordnung mit mehreren optischen Bauteilen, insbesondere mehrere Linsen, sein kann, ist in einer bevorzugten Ausführungsform entlang der optischen Achse, die bevorzugt dem Lichtpfad entspricht, verschiebbar angeordnet. In diesem Fall ist die Linse auch ein Kompensatorelement oder gehört auch sie zum Kompensatorelement, da durch sie die Fokuslage von Licht auf dem ortsauflösenden Detektor einstellbar ist. Durch die mechanische Verschiebung einzelner optischer Bauteile selbst wird zwar keine oder allenfalls eine sehr geringe Verschiebung der Fokuslage in Z-Richtung verursacht, aber die Fokuslage in Z-Richtung hängt auf Grund chromatischer Abweichungen der Abbildungseigenschaften mit der Auswahl eines Detektions-Wellenlängenbandes zusammen. Bei einem gewöhnlichen Laserscanning-Mikroskop, wie es aus dem Stand der Technik bekannt ist, wird in aller Regel die dabei verwendete Lochblende so justiert, dass sie in einem Mittel für alle zu verwendenden Detektions-Wellenlängenbänder gut ist, aber zumindest nicht für alle perfekt. Die Verwendung eines ortsauflösenden Detektors ermöglicht den Verzicht auf eine Lochblende. In Verbindung mit einem Kompensatorelement zur Einstellung der Fokuslage von Licht auf dem ortsauflösenden Detektor in Z-Richtung wird somit eine zusätzliche Einstellmöglichkeit, die die Abbildungsgüte verbessert, bereitgestellt. Das Kompensatorelement kann mehrere unterschiedliche Elemente, beispielsweise einen kippbaren Spiegel und eine verschiebbare Linse aufweisen, die bevorzugt aber nicht zwangsläufig verwendet werden, um die Fokuslage des Lichtes auf dem Detektor in unterschiedlichen Richtungen einzustellen. Mehrere Kompensatorelemente, die auf Licht aus dem gleichen Filtermodul wirken, werden als Kompensationseinrichtung bezeichnet. Die verschiedenen Kompensatorelemente einer Kompensationseinrichtung können die Fokuslage in unterschiedlichen Richtungen beeinflussen. Dabei ist es von Vorteil, wenn jedes Kompensatorelement die Fokuslage in nur einer Raumrichtung beeinflusst. Es ist jedoch auch möglich, dass einzelne oder alle Kompensatorelemente einer Kompensationseinrichtung die Fokuslage in mehrerer Raumrichtungen beeinflussen.

Für einige Anwendungen ist von Vorteil, dass das Kompensatorelement zwischen dem Filtermodul und dem ortsauflösenden Detektor angeordnet ist, wobei die Anordnung zwischen den beiden Bauteilen bedeutet, dass sich das Kompensatorelement im Strahlengang des Lichtes befindet, das vom Filtermodul zum ortsauflösenden Detektor geleitet wird. Es ist nicht notwendig, dass sich das Kompensatorelement baulich zwischen dem Filtermodul und dem Detektor befindet, sofern es sich im Strahlengang zwischen diesen beiden Elementen befindet.

Vorzugsweise sind die kontinuierlich durchstimmbaren Filterelemente Farbverlaufsfilter, die in einer Längsrichtung verschiebbar angeordnet sind. Sie wirken als Kurzpassfilter und als Langpassfilter, wobei unterschiedliche Farbverlaufsfilter für die unterschiedlichen Filter-Arten verwendet werden. Beide Farbverlaufsfilter sind entlang einer Längsrichtung verschiebbar. Die Längsrichtung entspricht dabei der Richtung, in der auch der Gradient des Filters verläuft. Die Grenzwellenlänge eines derartigen Farbverlaufsfilter hängt von der Position ab, an der das Licht auf den Farbverlaufsfilter trifft. Die Grenzwellenlänge verändert sich folglich und bildet so einen Gradienten. Entlang dieser Richtung ist der Farbverlaufsfilter verschieblich angeordnet.

In einer bevorzugten Ausgestaltung verfügt die Detektionseinrichtung über mehrere Detektoren. Die Anzahl der vorhandenen Detektoren entspricht dabei vorteilhafterweise der Anzahl der Filtermodule, die die Anzahl der ohne Änderungen im Mikroskopaufbau detektierbaren spektrale Kanäle begrenzt. Daher ist es von Vorteil, wenn die Anzahl der Detektoren identisch ist zu Anteil der Filtermodule. Vorzugsweise sind mehrere der Detektoren als ortsauflösende Detektoren ausgebildet. Besonders bevorzugt sind alle verwendeten Detektoren ortsauflösende Detektoren.

Vor jedem ortsauflösenden Detektor befindet sich vorteilhafterweise ein Kompensatorelement, mittels dessen eine Auftreffposition von Licht auf dem jeweiligen ortsauflösenden Detektor einstellbar ist. Die Kompensatorelemente für die unterschiedlichen ortsauflösende Detektoren können identisch zueinander oder unterschiedlich ausgebildet sein. Vorzugsweise sind sie unabhängig voneinander steuerbar, sodass die Auftreffposition von Licht auf den unterschiedlichen ortsauflösenden Detektoren getrennt und unabhängig voneinander einstellbar ist. Bei einer Filterkaskade durchläuft das den jeweiligen Detektoren zugeleitete Licht eine unterschiedliche Anzahl von Filterelementen. So wird ein Teil des Lichtes dem ersten Detektor zugeleitet, nachdem es ausschließlich das erste Filtermodul durchlaufen hat. Ein weiterer Teil des Lichtes wird einem zweiten Detektor zugeleitet und hat bereits zwei Filtermodule durchlaufen. Je mehr mechanisch verstellbare Filterelemente in diesen unterschiedlichen Filtermodulen enthalten sind und gegebenenfalls verstellt werden, desto größer ist gegebenenfalls auch die Korrektur der Auftreffposition des Lichtes auf dem ortsauflösenden Detektor, die notwendig ist, um die gewünschte Ortsauflösung und Qualität der Abbildungen zu erreichen und aufrechtzuerhalten. Daher sind die Kompensatorelemente bevorzugt separat, unabhängig und/oder einzeln voneinander ansteuerbar und einstellbar.

Vorzugsweise verfügt jedes Filtermodul über einen Detektorausgang, durch den Licht auf wenigstens einen Detektor geleitet wird. Zudem verfügt zumindest jedes bis auf das letzte Filtermodul über einen Filterausgang, durch den Licht auf ein weiteres Filtermodul geleitet wird. Auch das letzte Filtermodul kann über einen Filterausgang verfügen, hinter dem ein weiteres Filtermodul angeordnet werden kann. Dieser Filterausgang des letzten Filtermoduls kann als weiterer Detektorausgang verwendet werden oder er kann in eine Strahlfalle führen. Es hat sich als vorteilhaft herausgestellt, wenn hinter jedem Detektorausgang ein Detektor angeordnet wird, um das Licht, dass das jeweilige Filtermodul durch den Detektorausgang verlässt, aufzufangen, zu detektieren und der Auswertung zuzuführen.

In einer Ausführungsform verfügt die Detektionseinrichtung über wenigstens ein Umschaltelement, durch das das Licht von wenigstens einem Filtermodul zu unterschiedlichen Detektoren leitbar ist. Das Umschaltelement ist beispielsweise als Kippspiegel ausgebildet. Das Umschaltelement ist eingerichtet, Licht von einem Filtermodul, das das Filtermodul bevorzugt durch einen Detektorausgang verlässt und auf das Umschaltelement geleitet wird, auf unterschiedliche Detektoren zu leiten. Das Umschaltelement ist dazu in unterschiedliche Stellungen oder Zustände bringbar, in denen das Licht auf verschiedenen Detektoren geleitet wird, wenn es von dem Filtermodul kommend auf das Umschaltelement trifft.

Alternativ oder zusätzlich dazu ist durch das Umschaltelement das Licht von mehreren Filtermodulen auf einen Detektor, vorzugsweise einen ortsauflösenden Detektor leitbar. Dadurch kann die Anzahl der benötigten Detektoren, insbesondere der ortsauflösenden Detektoren, reduziert werden. Dadurch werden Kosten gespart. Das Umschaltelement kann auch in dieser Ausgestaltung als Kippspiegel ausgebildet sein. Je nach Stellung des Umschaltelementes, also insbesondere des Kippspiegels, wird Licht aus unterschiedlichen Filtermodulen auf den gewünschten Detektor geleitet. Durch ein einziges Umschaltelement wird vorzugsweise jeweils nur Licht aus einem einzigen Filtermodul auf den Detektor geleitet. Mit modernen Umschaltelementen, insbesondere Kippspiegeln ist ein schnelles Umschalten möglich.

Vorzugsweise verfügt die Detektoranordnung über mehrere Umschaltelemente, vorzugsweise so viele Umschaltelemente wie Filtermodule. Jedes Umschaltelement ist dann eingerichtet, Licht von wenigstens einem Filtermodul auf unterschiedliche Detektoren zu leiten. Ist für jedes der Filtermodule ein separates Umschaltelement vorhanden, kann das Licht, dass die Filtermodule verlässt, auf den jeweils gewünschten Detektor geleitet werden, wobei dies unabhängig von dem gewählten Detektor für das Licht eines anderen Filtermoduls gewählt werden kann.

Alternativ oder zusätzlich dazu ist wenigstens ein Umschaltelement eingerichtet, das Licht aus mehreren Filtermodulen umzuleiten. Dazu wird das Licht der jeweiligen Filtermodule durch optische Elemente, beispielsweise Spiegel, auf das Umschaltelement geleitet und von dort dem jeweiligen Detektor zugeordnet. Dadurch wird die Anzahl der benötigen Umschaltelemente reduziert. Die Wahl der zu verwendenden Detektoren für das Licht aus mehreren Filtermodulen ist in dieser Ausgestaltung nicht unabhängig voneinander.

Die Umschaltelemente oder das Umschaltelement ermöglichen es, in schneller Abfolge hochaufgelöste Bildaufnahmen der Probe in verschiedenen Farbkanälen, beispielsweise unter Nutzung verschiedener Fluorophore, zu gewinnen, wobei für jeden Farbkanal ein ortsauflösender Detektor verwendet wird, obwohl nicht für jeden verwendeten Farbkanal beziehungsweise jedes verwendete Filtermodul ein nur diesem Modul zugeordneter ortsaufösender Detektor vorhanden ist. Die Anzahl der benötigten ortsauflösenden Detektoren wird dadurch reduziert. Dies ist insbesondere für die Ausgestaltung des Umschaltelementes möglich, die es erlaubt, Licht aus unterschiedlichen Filtermodulen auf einen einzigen ortsauflösenden Detektor zu leiten. Dadurch ist es vorzugsweise ausreichend, wenn die Detektionseinrichtung nur einen einzigen ortsauflösenden Detektor aufweist.

Die Bildaufnahme kann dann beispielsweise zeilenweise erfolgen, wobei bei einer ersten Stellung des Umschaltelements entlang einer Zeile ein erster Farbkanal unter Nutzung eines ersten Filtermoduls aufgenommen wird, wobei während eines Zurücklaufens der Scan-Einheit an den Anfang einer Zeile das Umschaltelement umgeschaltet wird und wobei entlang einer Zeile ein zweiter Farbkanal unter Nutzung eines zweiten Filtermoduls aufgenommen wird. Dieses Schema kann fortgesetzt werden, bis zu allen gewünschten Farbkanälen, maximal aber bis zu jedem vorhandenen Filtermodul eine Bildzeile aufgenommen wurde. Alternativ ist es auch möglich, jeweils am Zeilenende das Umschaltelement umzuschalten und eine Folgezeile jeweils mit umgekehrter Abtastrichtung aufzunehmen. Anschließend wird das Schema beispielsweise in derselben Reihenfolge, alternativ auch in einer anderen Reihenfolge der verwendeten Farbkanäle für eine folgende Bildzeile wiederholt. Es ist auch möglich, ein Aufnahmeschema zu anzuwenden, bei dem die Scan-Einheit bei jedem einzelnen Durchlauf eine neue Zeile abtastet, sodass die einzelnen Farbkanäle verschachtelt aufgenommen werden. Ein solches Aufnahmeschema ist in der Laserscanning-Mikroskopie üblich, wobei der Zeilenabstand so gewählt wird, dass der Abstand der Zeilen eines einzigen Farbkanals an die angestrebte Auflösung des Gesamtbildes angepasst ist. Umschaltelemente, beispielsweise Kippspiegel mit vorab festgelegten Kippstellungen, können mit so hoher Reproduzierbarkeit in ihre festgelegten Schaltstellungen geschaltet werden, dass Einstellungen der den Filtermodulen zugeordneten Kompensatorelemente nur jeweils einmalig nach Einstellung der Filtermodule zur Auswahl der Detektions-Wellenlängenbänder zu Beginn einer Aufnahme zu mehreren Farbkanälen erfolgen muss.

Vorzugsweise ist das Umschaltelement als Kompensatorelement ausgebildet. In diesem Fall werden jeweils nach dem Einstellen der Filtermodule hinsichtlich der Detektions-Wellenlängenbänder für jeden Farbkanal die Schaltstellungen des integrierten Umschalt- und Kompensatorelements derart festgelegt, dass nach jedem Schalten in eine der festgelegten Schaltstellungen ein dem jeweils genutzten Filtermodul zugeordneter Fehler kompensiert ist.

Bevorzugt verfügt die Detektionseinrichtung über eine optische Einrichtung, die derart eingerichtet ist, dass eine Taille eines einfallenden Gaußschen Bündels zwischen zwei benachbarten Filtermodulen oder innerhalb eines Filtermoduls liegt. Vorzugsweise wird eine Strahldivergenz verringert. Die benachbarten Filtermodule sind bevorzugt in der Mitte oder zumindest im mittleren Bereich der Filterkaskade angeordnet. Verfügt die Filterkaskade beispielsweise über vier Filtermodule, ist die Taille bevorzugt zwischen dem zweiten und dritten Filtermodul angeordnet. Verfügt die Filterkaskade über fünf Filtermodule, liegt die Taille bevorzugt innerhalb des dritten Filtermoduls oder zwischen dem dritten und dem vierten der Filtermodule. Auf diese Weise wird erreicht, dass die bei einem Gaußschen Bündel mit kleiner Taille zwangsläufig vorhandene Divergenz einen möglichst kleinen Einfluss auf die Filterung des einfallenden Lichtes durch die Filterkaskade hat. Je kleiner die Taille des Gaußschen Bündels ist, desto größer ist die Divergenz. Bei der Verwendung von kontinuierlich durchstimmbaren Filterelementen, insbesondere von Farbverlaufsfiltern, ist es wichtig, dass der jeweilige Lichtfleck, den das einfallende Licht auf dem jeweiligen Filterelement bildet, möglichst klein ist, um die räumliche Abhängigkeit der Grenzwellenlänge, die der Farbverlaufsfilter zwangsläufig aufweist, innerhalb des Lichtfleckes möglichst klein zu halten. Ein zu großer Durchmesser des Lichtstrahls kann auch dazu führen, dass Spiegel, die den Strahl innerhalb der Kaskade weiterleiten, nicht mehr den ganzen Strahl weiterleiten können und somit der Strahl beschnitten wird. Würde die Taille des Gaußschen Bündels beispielsweise vor das erste Filtermodul gelegt, weitet sich das Gaußsche Bündel beim Durchlaufen der Filterkaskade immer weiter auf, sodass der Lichtfleck insbesondere auf dem letzten Filtermodul und dessen Filterelementen sehr groß wird. Diese Anordnung wird daher vermieden. Der beste Wert für den Durchmesser der Strahltaille hängt ab von der genauen Bauart der einzelnen Filtermodule sowie der Anzahl der Module. In einer konkreten Anordnung der Anmelderin wird die Detektionseinrichtung mit einem Gaußschen Bündel betrieben, dessen Taille einen Durchmesser von kleiner als 1,5 mm, bevorzugt kleiner als 1 mm aufweist.

Durch die Positionierung der Taille in dem mittleren Bereich der Filterkaskade wird erreicht, dass sich der Lichtfleck auf den ersten Filtermodulen und deren Filterelementen mit Fortschreiten entlang des Lichtpfades zunächst verkleinert, bis die Taille erreicht wird. Nach der Taille hingegen erfolgt die Aufweitung und der Lichtfleck wird größer. Insgesamt jedoch bleibt die Größe des Lichtfleckes auf allen kontinuierlich durchstimmbaren Filterelementen in einem vertretbaren Rahmen.

Vorzugsweise verfügt die Detektionseinrichtung über eine elektrische oder elektronische Steuerung, die eingerichtet ist, das Kompensatorelement derart zu steuern, dass ein Maximum der von dem ortsauflösenden Detektor detektierten Strahlung in der Mitte des ortsauflösenden Detektors liegt. Die elektronische Steuerung kann beispielsweise Teil einer elektronischen Datenverarbeitungseinrichtung sein, die Teil des Mikroskops oder Teil der Detektoreinrichtung sein kann. Da der ortsauflösende Detektor ohnehin die Verteilung der einfallenden Lichtintensität misst, kann aus dem detektierten Signal eine Stellgröße bestimmt werden, um das Kompensatorelement zu steuern.

**In** einer bevorzugten Ausgestaltung handelt es sich bei einem, besonders bevorzugt jedoch bei allen ortsauflösende Detektoren um segmentierte Flächendektoren. Dazu gehören beispielsweise pixelierte Detektoren, die mehrere voneinander räumlich getrennte Einzeldetektoren aufweisen, beispielsweise SPAD-Arrays (SPAD: Single Photon Avalanche Diode) .Ihnen vorgelagert ist vorzugsweise wenigstens eine Linse oder Linsenanordnung, die eingerichtet ist, das einfallende Licht auf den Detektor abzubilden. Dabei ist die Linse oder Linsenanordnung vorzugsweise so eingerichtet, dass das erste Maximum, das erste Minimum und das zweite Maximum der Beugungsscheibe ortsaufgelöst detektiert werden. Alternativ kann auch das erste Maximum und das erste Minimum detektiert werden.

Das wenigstens eine erfindungsgemäß vorhandene Kompensatorelement wird im Betrieb der Detektionseinrichtung als Teil eines Laserscanning-Mikroskopes verwendet, um die durch das Verschieben wenigstens eines der Filterelemente verursachte Verschiebung des gefilterten Lichtes, das heißt der Fokuslage des gefilterten Lichts auf dem ortsauflösenden Detektor, zu kompensieren. Dies soll natürlich möglichst schnell geschehen, um insbesondere die Messung nicht unnötig zu verzögern. Ein Laserscanning-Mikroskop verfügt über wenigstens eine Lichtquelle und eine Optik, die das Licht der Lichtquelle in einen Fokusbereich der Probe fokussiert. Bei diesem Beleuchtungslicht handelt es sich um das Anregungslicht, mit dem Fluorophore angeregt werden, die sich in oder auf der Probe befinden. Das Beleuchtungslicht wird durch eine Scan-Einheit über die Probe gescannt oder gerastert. Die Fluorophore senden dann Emissionslicht aus, das detektiert werden soll. Das Emissionslicht wird über die Scan-Einheit der Detektionseinrichtung zugeführt und dort durch das wenigstens eine Filtermodul gefiltert und dem wenigstens einen ortsauflösenden Detektor zugeleitet. Dabei ist der Detektor, genauer eine Detektionsapertur des Detektors konfokal zu dem Fokusbereich auf oder in der Probe angeordnet. Diese Konfokalität kann durch das Verschieben wenigstens eines Filterelementes gestört werden und wird dann durch das Kompensatorelement wieder hergestellt.

Dazu muss bestimmt werden, wie das Kompensatorelement zur Kompensierung der Störung einzustellen ist. Eine Vorrichtung und ein Verfahren, mit dem dies leicht ermittelt werden kann, sind beschrieben in der noch nicht veröffentlichen internationalen Patentanmeldungen mit dem Aktenzeichen PCT/EP2020/066589. Der gesamte Inhalt dieser Anmeldung wird hiermit durch Bezugnahme in die vorliegende Anmeldung aufgenommen.

Das Bestimmen kann mittels einer Einrichtung zur Überprüfung der Konfokalität beispielsweise in mehreren Schritten erfolgen. Das von der Lichtquelle ausgesandte Licht wird über die Scan-Einheit nicht der Probe, sondern einem Hilfsdetektor zugeleitet. Dieser, genauer seine Hilfsdetektorapertur, ist in einer Fokusebene angeordnet und wird durch Verstellen der Scan-Einheit mit dem Beleuchtungslicht abgetastet. Dabei wird eine erste Intensitätsverteilung des vom Hilfsdetektor detektierten Beleuchtungslichtes erfasst.

In einem anderen Schritt wird mittels einer Hilfslichtquelle, die vorzugsweise ebenfalls in derselben Fokusebene wie der Hilfsdetektor und auf einer zur Hilfsdetektorapertur zugehörigen optischen Achse angeordnet ist, Hilfslicht in die Scan-Einheit eingeleitet, das mittels der Scan-Einheit der Detektionseinrichtung zugeleitet wird. Hierbei können Hilfsdetektorapertur und Hilfslichtquelle aus demselben Element gebildet sein, beispielsweise einer Diode, die sowohl als Emitter als auch als Empfänger betrieben werden kann, oder dem Ende einer Lichtleitfaser, die über einen Faserkoppler sowohl an einen Detektor als auch an ein Leuchtmittel, beispielsweise einen Laser, angeschlossen ist. Auch hier wird durch Verstellen der Scan-Einheit die Detektionseinrichtung, genauer ihre Detektionsapertur, abgetastet und so eine zweite Intensitätsverteilung erfasst. Dann wird mindestens ein Unterschied zwischen der ersten Intensitätsverteilung und der zweiten Intensitätsverteilung über die verschiedenen Stellungen der Scan-Einheit hinweg als Maß für einen Fehler der Konfokalität erfasst. Dieser Fehler wird bestimmt und aus ihm wird eine Stellgröße für das Kompensatorelement abgeleitet und das Kompensatorelement wird so eingestellt, dass der Fehler kompensiert wird. Eine Kombination aus Hilfslichtquelle und Hilfsdetektorapertur wird im Folgenden Hilfseinrichtung genannt. Dies gilt auch dann, wenn Hilfsdetektorapertur und Hilfslichtquelle durch das gleiche Bauteil, beispielsweise eine Diode, gebildet werden.

Durch die beiden Schritte ist es möglich, besonders einfach und schnell eine Abweichung in der Konfokalität zu ermitteln und das Kompensatorelement geeignet einzustellen. Da die Detektionseinrichtung gemäß den Ausführungsbeispielen der vorliegenden Erfindung eingerichtet sein kann, unterschiedliche spektrale Bereiche, also unterschiedliche Farben, zu detektieren, ist es von Vorteil, wenn das Laserscanning-Mikroskop mehrere Hilfseinrichtungen mit jeweils einer Hilfslichtquelle aufweist. Die verschiedenen Hilfslichtquellen senden jeweils Hilfslicht mit zueinander unterschiedlichen Wellenlängen aus oder können es zumindest aussenden. Jede Hilfseinrichtung verfügt zudem über jeweils eine Hilfsdetektorapertur, die eingerichtet sind, das Licht der Hilfslichtquelle der jeweiligen Hilfseinrichtung zu detektieren. Die Hilfsdetektoraperturen der verschiedenen Hilfseinrichtungen können daher Licht mit zueinander unterschiedlichen Wellenlängen detektieren. Eine Anordnung mehrerer solcher Hilfseinrichtungen ist deshalb auf einfache Weise möglich, weil es nicht darauf ankommt, an welchem Ort innerhalb einer Fokalebene ein solches Paar angeordnet ist, sondern nur darauf, dass es in einer Fokalebene innerhalb des Abtastbereichs der Scan-Einheit angeordnet ist. Sind mehrere Hilfseinrichtungen vorhanden, kann das oben skizzierte Verfahren auch für mehrere spektrale Anteile, also mehrere Detektionskanäle gleichzeitig durchgeführt werden. Jede Hilfseinrichtung mit einer Hilfslichtquelle, die Hilfslicht aussenden kann, und einer Hilfsdetektorapertur, die dieses von der Hilfslichtquelle ausgesandte Licht detektieren kann, funktioniert vorzugsweise bei einer vorbestimmten Wellenlänge und Hilfslichtquelle und Hilfsdetektorapertur sind bezüglich dieser Wellenlänge, die auch als Arbeitswellenlänge der Hilfseinrichtung bezeichnet werden kann, aufeinander abgestimmt. Werden mehrere Hilfseinrichtungen verwendet, weisen diese vorzugsweise unterschiedliche Arbeitswellenlängen auf

Die Erfindung löst die gestellte Aufgabe zudem durch ein Laserscanning-Mikroskop mit einer hier beschriebenen Detektionseinrichtung.

Mithilfe der beiliegenden Zeichnungen werden nachfolgend einige Ausführungsbeispiele der vorliegenden Erfindung näher erläutert. Es zeigt
- Figur 1 -: eine schematische Darstellung einer Detektionseinrichtung gemäß einem ersten Ausführungsbeispiel der vorliegenden Erfindung,
- Figur 2 -: einen Ausschnitt einer Detektionseinrichtung gemäß einem weiteren Ausführungsbeispiel der vorliegenden Erfindung,
- Figur 3 -: den Ausschnitt aus Figur 2 in einer anderen Einstellung,
- Figur 4 -: einen Ausschnitt einer Detektionseinrichtung gemäß einem weiteren Ausführungsbeispiel der vorliegenden Erfindung und
- Figuren 5 und 6-: eine schematische Darstellung von gemessenen Intensitäten

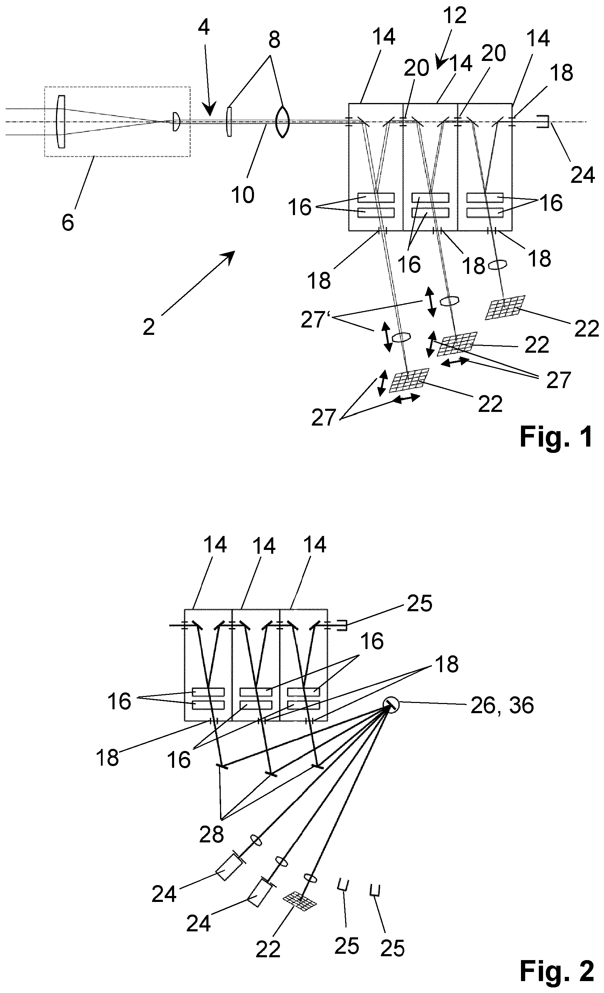

Figur 1 zeigt schematisch Detektionseinrichtung 2 gemäß einem ersten Ausführungsbeispiel der vorliegenden Erfindung. Sie verfügt über einen Lichteingang 4, durch den Licht, das zuvor durch andere optische Einrichtungen 6, von denen lediglich beispielhaft eine optische Einrichtung 6 dargestellt ist, geführt wurde, in die Detektionseinrichtung 2 eindringt. Schematisch ist ein Teleskop 8 dargestellt. Durch das Teleskop verschiebt sich die Taille des eintretenden Gaußschen Bündels im gezeigten Ausführungsbeispiel nach rechts zwischen die ersten beiden Filtermodule 14. Die Detektionseinrichtung 2 verfügt über eine Filterkaskade 12, die im gezeigten Ausführungsbeispiel drei Filtermodule 14 aufweist. Jedes der Filtermodule 14 verfügt über zwei Filterelemente 16, die kontinuierlich durchstimmbar sind und beispielsweise als Farbverlaufsfilter ausgebildet sein können. Die ersten beiden gezeigten Filtermodule 14 verfügen über jeweils einen Detektorausgang 18 und einen Filterausgang 20. Der Teil des Lichtstrahls 10, der im ersten Filtermodul 14 die beiden Filterelemente 16 durchdringt, wird aus dem Detektorausgang 18 zu einem ortsauflösenden Detektor 22 geleitet. Der Teil des Lichtstrahls 10, der im ersten Filtermodul 14 an dem ersten der Filterelemente 16 reflektiert wird, wird aus dem Filterausgang 20 zum nächsten Filtermodul 14 geführt. Das letzte Filtermodul 14, das in Figur 1 ganz rechts dargestellt ist, verfügt über zwei Detektorausgänge 18, da das jeweils austretende Licht nicht einem weiteren Filtermodul 14 zugeführt wird, sondern einem als ortsauflösende Detektoren 22 ausgebildeten Detektor und einer Strahlfalle 25. Optisch hinter den Filterelementen 16 eines Filtermoduls 14 befinden sich in Figur 1 nicht dargestellte Kompensatorelemente 26, die den jeweiligen Detektoren 22, 24 zugeordnet sein können und die verwendet werden können, um eine Fokuslage des Lichtes auf einem Detektor 22, 24 zu verändern. Ein Kompensatorelement 26 kann beispielsweise verwendet werden, um eine Abbildungslinse 32 senkrecht zur Strahlrichtung zu verschieben, wobei die Verschiebung, in der Figur durch Verschiebungspfeile 27' dargestellt, die Fokuslage in Z-Richtung einstellt. Andere Kompensatorelemente bewirken eine Verschiebung, in der Figur durch Verschiebungspfeile 27 dargestellt, in X-Richtung und in Y-Richtung. Der besseren Übersichtlichkeit wegen sind in der Figur 1 nur zwei der drei Filtermodule 14 Verschiebungspfeile 27, 27' zugeordnet. Auch dem dritten Filtermodul sind entsprechende, nicht dargestellte Kompensatorelemente 26 zugeordnet. Dadurch kann eine ausreichende Kompensation erreicht werden.

Figur 2 zeigt einen schematischen Ausschnitt aus einer Detektionseinrichtung 2 und stellt drei Filtermodule 14 mit je zwei Filterelementen 16 dar. Durch die in Figur 2 nach unten zeigenden Detektorausgänge 18 verlässt ein Teil des Lichtes das jeweilige Filtermodul 14 und wird auf einen Spiegel 28 geführt. Dieser Spiegel 28 reflektiert den Teil des Lichtes auf das Kompensatorelement 26, das im gezeigten Ausführungsbeispiel als beweglicher Spiegel ausgebildet ist. Es ist gleichzeitig ein Umschaltelement 36.

Das Umschaltelement 36 lenkt in der dargestellten Einstellung das Licht, das das erste Filtermodul 14 durch seinen Detektorausgang 18 verlassen hat, auf den ortsauflösenden Detektor 22 und das Licht, das die Detektorausgänge 18 des zweiten und des dritten Filtermoduls 14 verlassen hat, auf nicht ortsauflösende Sammeldetektoren 24.

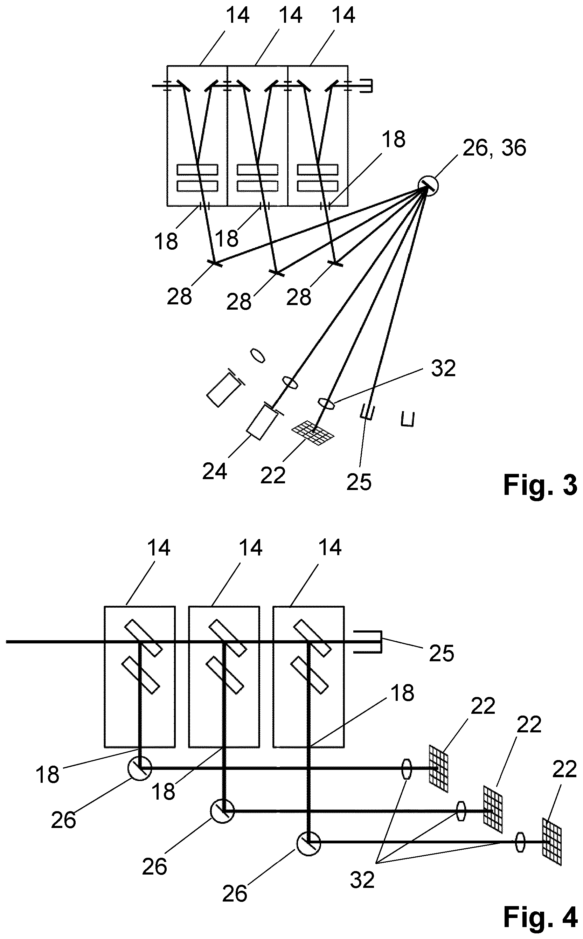

In einer Einstellung, die in Figur 3 dargestellt ist, leitet das Umschaltelement 36 Licht, das das zweite Filtermodul 14 durch dessen Detektorausgang 18 verlassen hat, auf den ortsauflösenden Detektor 22 und Licht, das das erste Filtermodul 14 durch dessen Detektorausgang 18 verlassen hat, in eine Strahlfalle 25, während es Licht, das das dritte Filtermodul 14 durch dessen Detektorausgang 18 verlassen hat, auf den Sammeldetektor 24, der dem ortsauflösenden Detektor 22 benachbart ist, leitet.

In einer dritten Einstellung, die nicht dargestellt ist, leitet es Licht, welches das dritte Filtermodul 14 durch dessen Detektorausgang 18 verlassen hat, auf den ortsauflösenden Detektor 22, während es übriges Licht jeweils in eine Strahlfalle 25 leitet. Dabei dient das Umschaltelement 36 gleichzeitig als Kompensatorelement 26. Das bedeutet, dass die festgelegte Einstellung des Umschaltelements 36 bei einer Änderung des ausgewählten Detektions-Wellenlängenbandes, das heißt, bei einer Änderung des Einstellung des dem ortsauflösenden Detektor 24 jeweils zugeordneten Filtermoduls 14 derart ist, dass ein Fehler der Fokuslage des Lichts auf dem ortsauflösenden Detektor 22 kompensiert ist. Eine Anpassung hinsichtlich der Lagen des Lichts auf den Sammeldetektoren ist nicht möglich, aber auch nicht nötig, da deren Detektionsaperturen ausreichend groß gewählt sind. In der gezeigten Einstellung des Ausführungsbeispiels ist das Kompensatorelement 26 also so angeordnet, dass das aus dem Detektorausgang 18 des zweiten und dritten Filtermoduls austretende Licht auf die beiden Sammeldetektoren 24 geleitet wird, während das aus dem Detektorausgang 18 des ersten Filtermoduls 14 austretende Licht auf den ortsauflösenden Detektor 22 trifft. Das als beweglicher Spiegel ausgebildete Kompensatorelement 26 dient auch als Umschaltelement 36, mit dem jeweils das aus einem Detektorausgang eines der Filtermodule 14 austretende Licht auf den ortsauflösenden Detektor 22 geleitet wird. In einer alternativen Ausgestaltung können auch die Spiegel 28 jeweils Teil einer Kompensationseinrichtung sein, die zwei Kompensatorelemente 26, die als zwei Spiegel ausgebildet sind, aufweist. Der jeweilige Spiegel 28 kann dann beispielsweise verwendet werden, um eine Kompensation in einer ersten Richtung zu erreichen. Der zweite Spiegel, also bevorzugt das Umschaltelement 36, wird in diesem Fall verwendet, um eine Kompensation in einer zweiten Richtung, die bevorzugt senkrecht auf der ersten Richtung steht, zu erreichen.

Figur 3 zeigt den aus Figur 2 bekannten Aufbau mit den Filtermodulen 14 und deren Detektorausgängen 18. Das austretende Licht wird auf die Spiegel 28 geführt, von denen es auf das Kompensatorelement 26 geleitet wird. Dies ist in Figur 3 in einer anderen Position dargestellt als in Figur 2. Das Licht des ersten Filtermoduls wird in eine Strahlfalle 25 geleitet und steht der Auswertung nicht zur Verfügung. In der Strahlfalle 25 wird das Licht absorbiert und kann somit nicht als Streulicht auf einen der Detektoren 22, 24 fallen. Das Licht des mittleren Filtermoduls 14 wird auf den ortsauflösenden Detektor 22 und das Licht des rechten Filtermoduls 14 auf den Sammeldetektor 24 geleitet. Da die Auftreffposition des Lichtes auf dem jeweiligen Detektor 22, 24 nur für den ortsauflösenden Detektor 22 relevant ist, ist in der gezeigten Ausführungsform, die nur über einen einzigen ortsauflösenden Detektor 22 verfügt ein einziges Kompensatorelement 26 ausreichend.

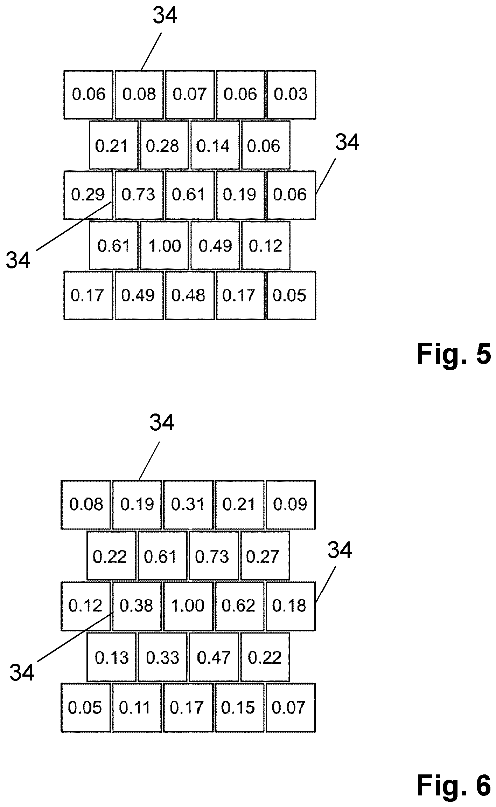

Figur 4 zeigt eine andere Ausgestaltung. Auch diese verfügt über drei Filtermodule 14 mit jeweils zwei Filterelementen 16, die jeweils kontinuierlich durchstimmbaren ausgebildet sind. Auch diese Filtermodule 14 verfügen über jeweils einen Detektorausgang 18, durch den Licht in Figur 4 nach unten das jeweilige Filtermodul 14 in Richtung auf jeweils einen ortsauflösenden Detektor 22 verlässt. Das durch einen Detektorausgang 18 austretende Licht trifft jeweils auf ein Kompensatorelement 26 und wird von dort durch jeweils eine Abbildungslinse 32 auf den jeweiligen ortsauflösenden Detektor 22 geleitet. Ein Umschaltelement 36 ist nicht nötig. Die Figuren 5 und 6 zeigen exemplarische Messwerte. Jedes Feld 34 entspricht einem Pixel eines ortsauflösenden Detektors 22. Beim Rastern über eine Probe wird eine Vielzahl von Teilbildern mit dem ortsauflösenden Detektor 22 aufgenommen, wobei jeder Pixel, also jedes Feld 34 die auftreffenden Photonen, also insbesondere die auftreffende Lichtintensität, detektiert. Die in den Figuren 5 und 6 gezeigten Werte, die den einzelnen Feldern 34 zugeordnet sind, entsprechen den aufsummierten Intensitäten über eine Mehrzahl von aufgenommenen Teilbildern. Es sind also Maße für eine über die Mehrzahl von Bildern integrierten Intensitäten, die von den jeweiligen Feldern 34 detektiert wurden. Dabei wurden die Werte normiert, so dass der Maximalwert bei 1,00 liegt. Bei einer optimal justierten Einrichtung ergibt sich, wenn sehr viele Photonen detektiert werden und ein hinreichender Bereich der Probe abgetastet wird, im Mittel eine rotationssymmetrische Verteilung. Eine solche ist in Figur 5, bei der der Maximalwert nach links unten verschoben ist, nicht gegeben. In Figur 6 ist der Maximalwert zwar im mittleren Feld 34, die darum herum liegende Verteilung der Werte ist annähernd rotationssymmetrisch. Abweichungen von der Rotationssymmetrie können sich unter anderem ergeben durch Photonenrauschen, durch einen nicht hinreichenden abgetasteten Bereich einer inhomogenen Probe, sowie durch eine nicht vollständige Kompensation. Grundsätzlich lassen sich aber auf Grundlage solcher aufsummierten Intensitäten die Kompensationseinrichtungen und deren Kompensatorelemente 26 so einstellen, dass Fehler der Fokuslagen kompensiert sind. Die Bestimmung der Kompensation kann erleichtert werden, wenn bei der Abtastung die Probe nicht nur mit Anregungslicht beaufschlagt wird, sondern auch mit STED-Licht, welches die Emission von Fluoreszenz in äußeren Bereichen des Anregungsfokus jeweils unterdrückt. Dies hat den Effekt, dass Fluoreszenz jeweils nur aus dem achsennahen Bereich des Anregungsfokus emittiert wird, sodass schon jede einzelne detektierte Intensitätsverteilung in besserer Näherung rotationssymmetrisch ist. Inhomogenitäten der Probe kommen weniger zum Tragen. Auf diese Weise lässt sich die Anlage, insbesondere das Mikroskop, justieren und einstellen, ohne dass eine Referenzprobe oder eine besondere Einrichtung zur Einstellung der Konfokalität nötig ist.

### Bezugszeichenliste

- 2: Detektionseinrichtung
- 4: Lichteingang
- 6: optische Einrichtung
- 8: Teleskop
- 10: Lichtstrahl
- 12: Filterkaskade
- 14: Filtermodul
- 16: Filterelement
- 18: Detektorausgang
- 20: Filterausgang
- 22: ortsauflösender Detektor
- 24: Sammeldetektor
- 25: Strahlfalle
- 26: Kompensatorelement
- 27, 27': Verschiebungspfeil
- 28: Spiegel
- 30: Absorptionselement
- 32: Abbildungslinse
- 34: Feld
- 36: Umschaltelement

## Patentansprüche

1. Detektionseinrichtung (2) für ein Laserscanning-Mikroskop, wobei die Detektionseinrichtung (2)
- einen Lichteingang (4),
- wenigstens ein Filtermodul (14) und
- wenigstens einen ortsauflösenden Detektor (22) aufweist und eingerichtet ist, Licht von dem Lichteingang (4) zu dem Filtermodul (14) und von dort zu dem ortsauflösenden Detektor (22) zu leiten,
**dadurch gekennzeichnet, dass**
wenigstens ein Filtermodul (14) als kontinuierliches Filtermodul mit zwei kontinuierlich durchstimmbaren Filterelementen (16) ausgebildet ist und optisch hinter dem kontinuierlichen Filtermodul (14) wenigstens ein Kompensatorelement (26) angeordnet ist, mittels dessen eine Fokuslage von Licht auf dem ortsauflösenden Detektor (22) einstellbar ist.

2. Detektionseinrichtung (2) nach Anspruch 1, **dadurch gekennzeichnet, dass** das wenigstens eine Filtermodul (14) Teil einer Filterkaskade (12) mit wenigstens zwei Filtermodulen (14) ist.

3. Detektionseinrichtung (2) nach Anspruch 1 oder 2, **dadurch gekennzeichnet, dass** wenigstens ein Kompensatorelement (26) eingerichtet ist, den ortsauflösenden Detektor zu bewegen.

4. Detektionseinrichtung (2) nach einem der vorstehenden Ansprüche, **dadurch gekennzeichnet, dass** wenigstens ein Kompensatorelement (26) zwischen dem kontinuierlichen Filtermodul (14) und dem ortsauflösenden Detektor angeordnet ist.

5. Detektionseinrichtung (2) nach Anspruch 4, **dadurch gekennzeichnet, dass** wenigstens ein Kompensatorelement (26) als bewegbarer Spiegel (28) ausgebildet ist, der vorzugsweise um wenigstens zwei Kippachsen kippbar gelagert ist.

6. Detektionseinrichtung (2) nach einem der vorstehenden Ansprüche, **dadurch gekennzeichnet, dass** die kontinuierlich durchstimmbaren Filterelemente (16) Farbverlaufsfilter sind, die in einer Längsrichtung verschiebbar angeordnet sind.

7. Detektionseinrichtung (2) nach einem der vorstehenden Ansprüche, **dadurch gekennzeichnet, dass** die Detektionseinrichtung (2) mehrere Detektoren, vorzugsweise so viele Detektoren wie Filtermodule (14) oder wie Detektorausgänge (18), aufweist, wobei vorzugsweise mehrere, besonders bevorzugt alle, Detektoren als ortsauflösende Detektoren (22) ausgebildet sind.

8. Detektionseinrichtung (2) nach Anspruch 7, **dadurch gekennzeichnet, dass** vor jedem ortsauflösenden Detektor (22) ein Kompensatorelement (26) angeordnet ist, mittels dessen eine Fokuslage von Licht auf dem ortsauflösenden Detektor (22) einstellbar ist.

9. Detektionseinrichtung (2) nach einem der vorstehenden Ansprüche, **dadurch gekennzeichnet, dass** die Detektionseinrichtung (2) wenigstens ein Umschaltelement (36) aufweist, durch das das Licht von wenigstens einem Filtermodul (14) zu unterschiedlichen Detektoren leitbar ist und/oder durch das das Licht von mehreren Filtermodulen (14) auf einen Detektor, vorzugsweise einen ortsauflösenden Detektor (22) leitbar ist, wobei vorzugsweise wenigstens ein Umschaltelement (36) ein Kompensatorelement (26) ist.

10. Detektionseinrichtung (2) nach einem der vorstehenden Ansprüche, **dadurch gekennzeichnet, dass** bis auf das letzte Filtermodul (14) jedes Filtermodul (14) einen Detektorausgang (18), durch den Licht auf einen Detektor geleitet wird, und einen Filterausgang (20) aufweist, durch den Licht auf ein weiteres Filtermodul (14) geleitet wird.

11. Detektionseinrichtung (2) nach einem der vorstehenden Ansprüche, **dadurch gekennzeichnet, dass** die Detektionseinrichtung (2) eine optische Einrichtung, vorzugsweise ein Teleskop (8), aufweist, die derart eingerichtet ist, dass eine Taille eines einfallenden Gaußschen Bündels zwischen zwei benachbarten Filtermodulen (14) oder innerhalb eines Filtermoduls (14) liegt.

12. Detektionseinrichtung (2) nach einem der vorstehenden Ansprüche, **dadurch gekennzeichnet, dass** die Detektionseinrichtung (2) eine elektrische oder elektronische Steuerung aufweist, die eingerichtet ist, das Kompensatorelement (26) derart zu steuern, dass ein Maximum der von dem ortsauflösenden Detektor (22) detektierten Strahlung in der Mitte des ortsauflösenden Detektors (22) liegt.

13. Laserscanning-Mikroskop mit einer Detektionseinrichtung (2) nach einem der vorstehenden Ansprüche.

14. Laserscanning-Mikroskop nach Anspruch 13, **dadurch gekennzeichnet, dass** es eine Einrichtung zur Überprüfung der Konfokalität aufweist, die eine Hilfseinrichtung mit einer Hilfslichtquelle und einer Hilfsdetektorapertur beinhaltet, die gemeinsam in einer Fokusebene auf einer gemeinsamen optischen Achse angeordnet sind.

15. Laserscanning-Mikroskop nach Anspruch 14, **dadurch gekennzeichnet, dass** die Einrichtung zur Überprüfung der Konfokalität mehrere Hilfseinrichtungen aufweist, deren Hilfslichtquellen Hilfslicht unterschiedlicher Wellenlänge aussenden.

## Claims

1. A detection device (2) for a laser scanning microscope, wherein the detection device (2) comprises
- a light inlet (4),
- at least one filter module (14), and
- at least one spatially resolving detector (22)
and is configured to guide light from the light inlet (4) to the filter module (14) and from there to the spatially resolving detector (22),
**characterized in that**
at least one filter module (14) is configured as a continuous filter module with two continuously tunable filter elements (16), and at least one compensator element (26) is arranged optically downstream of the continuous filter module (14), by means of which a focus position of light on the spatially resolving detector (22) is adjustable.

2. The detection device (2) according to claim 1, **characterized in that** the at least one filter module (14) is part of a filter cascade (12) with at least two filter modules (14).

3. The detection device (2) according to claim 1 or 2, **characterized in that** at least one compensator element (26) is configured to move the spatially resolving detector.

4. The detection device (2) according to one of the preceding claims, **characterized in that** at least one compensator element (26) is arranged between the continuous filter module (14) and the spatially resolving detector.

5. The detection device (2) according to claim 4, **characterized in that** at least one compensator element (26) is designed as a movable mirror (28) which is preferably mounted so that it can be tilted about at least two tilt axes.

6. The detection device (2) according to one of the preceding claims, **characterized in that** the continuously tunable filter elements (16) are color gradient filters which are arranged so as to be displaceable in a longitudinal direction.

7. The detection device (2) according to one of the preceding claims, **characterized in that** the detection device (2) comprises several detectors, preferably as many detectors as filter modules (14) or as detector outputs (18), preferably wherein several, particularly preferably all, detectors are designed as spatially resolving detectors (22).

8. The detection device (2) according to claim 7, **characterized in that** a compensator element (26) is arranged upstream of each spatially resolving detector (22), by means of which a focal position of light on the spatially resolving detector (22) is adjustable.

9. The detection device (2) according to one of the preceding claims, **characterized in that** the detection device (2) comprises at least one switching element (36) by means of which the light can be guided from at least one filter module (14) to different detectors and/or by means of which the light can be guided from several filter modules (14) onto a detector, preferably a spatially resolving detector (22), preferably wherein at least one switching element (36) is a compensator element (26).

10. The detection device (2) according to one of the preceding claims, **characterized in that**, except for the last filter module (14), each filter module (14) comprises a detector outlet (18) through which light is directed onto a detector, and a filter outlet (20) through which light is directed onto a further filter module (14).

11. The detection device (2) according to one of the preceding claims, **characterized in that** the detection device (2) comprises an optical device, preferably a telescope (8), which is configured in such a way that a waist of an incident Gaussian bundle lies between two adjacent filter modules (14) or within a filter module (14).

12. The detection device (2) according to one of the preceding claims, **characterized in that** the detection device (2) comprises an electrical or electronic control device which is configured to control the compensator element (26) in such a way that a maximum of the radiation detected by the spatially resolving detector (22) is located at the center of the spatially resolving detector (22).

13. A laser scanning microscope comprising a detection device (2) according to one of the preceding claims.

14. The laser scanning microscope according to claim 13, **characterized in that** it comprises a device for checking confocality, which includes an auxiliary device with an auxiliary light source and an auxiliary detector aperture, which are arranged together in a focal plane on a common optical axis.

15. The laser scanning microscope according to claim 14, **characterized in that** the device for checking confocality comprises several auxiliary devices whose auxiliary light sources emit auxiliary light of different wavelengths.

## Revendications

1. Dispositif de détection (2) pour un microscope à balayage laser, le dispositif de détection (2) comprenant
- une entrée de lumière (4),
- au moins un module de filtre (14) et
- au moins un détecteur à résolution spatiale (22)
et est conçu pour guider la lumière de l'entrée de lumière (4) vers le module de filtrage (14) et de là vers le détecteur à résolution spatiale (22),
**caractérisé en ce qu'**
au moins un module de filtre (14) est conçu comme un module de filtre continu avec deux éléments de filtrage (16) accordables en continu et qu'au moins un élément compensateur (26) est disposé optiquement derrière le module de filtre continu (14), au moyen duquel une position de focalisation de la lumière sur le détecteur à résolution spatiale (22) peut être réglée.

2. Dispositif de détection (2) selon la revendication 1, **caractérisé en ce que** le au moins un module de filtre (14) fait partie d'une cascade de filtres (12) comprenant au moins deux modules de filtre (14).

3. Dispositif de détection (2) selon la revendication 1 ou 2, **caractérisé en ce qu'**au moins un élément compensateur (26) est agencé pour déplacer le détecteur à résolution spatiale.

4. Dispositif de détection (2) selon l'une des revendications précédentes, **caractérisé en ce qu'**au moins un élément compensateur (26) est disposé entre le module de filtre continu (14) et le détecteur à résolution spatiale.

5. Dispositif de détection (2) selon la revendication 4, **caractérisé en ce qu'**au moins un élément compensateur (26) est conçu comme un miroir mobile (28) qui est de préférence monté de manière à pouvoir basculer autour d'au moins deux axes de basculement.

6. Dispositif de détection (2) selon l'une des revendications précédentes, **caractérisé en ce que** les éléments de filtrage accordables en continu (16) sont des filtres à dégradé de couleurs qui sont disposés de manière à pouvoir être déplacés dans le sens longitudinal.

7. Dispositif de détection (2) selon l'une des revendications précédentes, **caractérisé en ce que** le dispositif de détection (2) comporte plusieurs détecteurs, de préférence autant de détecteurs que de modules de filtre (14) ou que de sorties de détecteur (18), plusieurs, de préférence tous les sont conçus comme des détecteurs à résolution spatiale (22).

8. Dispositif de détection (2) selon la revendication 7, **caractérisé en ce qu'**un élément compensateur (26) est disposé devant chaque détecteur à résolution spatiale (22), au moyen duquel une position de focalisation de la lumière sur le détecteur à résolution spatiale (22) peut être réglée.

9. Dispositif de détection (2) selon l'une des revendications précédentes, **caractérisé en ce que** le dispositif de détection (2) comporte au moins un élément de commutation (36) grâce auquel la lumière provenant peut être dirigée d'au moins un module de filtre (14) vers différents détecteurs et/ou grâce auquel la lumière provenant peut être dirigée de plusieurs modules de filtre (14) vers un détecteur, de préférence un détecteur à résolution spatiale (22), au moins un élément de commutation (36) étant de préférence un élément compensateur (26).

10. Dispositif de détection (2) selon l'une des revendications précédentes, **caractérisé en ce que**, à l'exception du dernier module de filtre (14), chaque module de filtre (14) comporte une sortie de détecteur (18) par laquelle la lumière est dirigée vers un détecteur, et une sortie de filtrage (20) par laquelle la lumière est dirigée vers un autre module de filtre (14).

11. Dispositif de détection (2) selon l'une des revendications précédentes, **caractérisé en ce que** le dispositif de détection (2) comprend un dispositif optique, de préférence un télescope (8), qui est agencé de telle sorte qu'une taille d'un faisceau gaussien incident se trouve entre deux modules de filtre (14) voisins ou à l'intérieur d'un module de filtre (14).

12. Dispositif de détection (2) selon l'une des revendications précédentes, **caractérisé en ce que** le dispositif de détection (2) comprend une commande électrique ou électronique qui est agencée pour commander l'élément compensateur (26) de telle sorte qu'un maximum du rayonnement détecté par le détecteur à résolution spatiale (22) se trouve au centre du détecteur à résolution spatiale (22).

13. Microscope à balayage laser avec un dispositif de détection (2) selon l'une des revendications précédentes.

14. Microscope à balayage laser selon la revendication 13, **caractérisé en ce qu'**il comprend un dispositif de contrôle de la confocalité qui comprend un dispositif auxiliaire avec une source lumineuse auxiliaire et une ouverture de détection auxiliaire, qui sont disposées ensemble dans un plan focal sur un axe optique commun.

15. Microscope à balayage laser selon la revendication 14, **caractérisé en ce que** le dispositif de contrôle de la confocalité comprend plusieurs dispositifs auxiliaires dont les sources lumineuses auxiliaires émettent une lumière auxiliaire de différentes longueurs d'onde.
